# EUROPEAN PATENT APPLICATION

(11) **EP 4 787 813 A1**
(43) Date of publication of application: **05.08.2026**
(21) Application number: 23953863.0
(22) Date of filing: 29.09.2023
(51) Int. Cl.: H04L 61/5046

(54) **LOCAL IDENTIFIER ALLOCATION IN MULTI-HOP SIDELINK UE-TO-UE RELAY**

(71) Applicant: Shenzhen TCL New Technology Co., Ltd, Shenzhen, Guangdong 518052 (CN)
(72) Inventor: CHEN, Zhe, Shenzhen, Guangdong 518052 (CN)
(74) Representative: Murgitroyd & Company
(86) International application number: PCT/CN2023/123051
(87) International publication number: WO 2025/065722

(57) **Abstract**

Provided in the present disclosure is a wireless communication method applied between user equipments (UEs). The method comprises: a second relay UE receiving a UE-to-UE relay discovery announcement message from a first relay UE; and the second relay UE determining, on the basis of the UE-to-UE relay discovery announcement message, whether to transmit a first message to a first remote UE which is connected to the second relay UE, wherein the first message is used for the second relay UE to reallocate a local ID to the first remote UE. Other aspects are further provided.

## Description

### TECHNICAL FIELD

The present disclosure relates to the field of communication systems, and more specifically, to a method for wireless communication between user equipment (UE), as well as its chip, computer-readable storage medium, and computer program product, and a first relay UE and a second relay UE.

### BACKGROUND ART

In Rel_18, the requirements for sidelink relay are not limited to supporting 5G ProSe UE-to-Network Relay (5G Proximity Services U2N Relay), but also need to support U2U (UE-to-UE) relay, so that in the absence of network coverage, a relay UE can transmit sidelink data from a source UE to a target UE, and a remote UE can also establish a connection with another remote UE through a relay UE.

In the current Rel_18 discussions, the structure of the Service-based Radio Access Protocol (SRAP) header is being discussed, and some schemes have been proposed. However, in Rel_19, the concept of multi-hop relay is expected to be introduced, so RAN2 expects the existing single-hop U2U sidelink relay to be compatible with future multi-hop U2U sidelink relay. Thus, the design of the SRAP header becomes more complex.

It should be noted that the content described in this section does not constitute or is not considered as an acknowledgment of any prior art.

### SUMMARY

To overcome at least one of the above technical problems, the present disclosure proposes a local identifier allocation in multi-hop sidelink UE-to-UE relay, which can ensure that the local identifier IDs allocated by multiple relay UEs are unique, thereby reducing the occurrence of local ID conflicts and improving communication efficiency.

One aspect of the present disclosure provides a method for wireless communication between user equipment (UE), including: a second relay UE receiving a UE-to-UE relay discovery announcement message from a first relay UE; the second relay UE determining whether to transmit a first message to a first remote UE connected to the second relay UE based on the UE-to-UE relay discovery announcement message, wherein the first message is used for the second relay UE to reallocate a local ID to the first remote UE.

According to an exemplary embodiment, the UE-to-UE relay discovery announcement message includes at least a first subset of a UE identifier (ID) mapping relationship set associated with the first relay UE, the UE ID mapping relationship set includes a mapping relationship between the UE Layer2 identifier (L2 ID) and the local ID of each UE among multiple UEs that the first relay UE has connected and/or discovered, wherein the local ID of each UE among the multiple UEs is uniquely allocated by the first relay UE, and wherein the first subset includes a mapping relationship between the local ID allocated by the first relay UE to the first remote UE connected to the first relay UE and the UE L2 ID of the first remote UE.

According to an exemplary embodiment, the second relay UE determines whether to transmit the first message to a second remote UE connected to the second relay UE based on the UE-to-UE relay discovery announcement message, including: when the local ID of one UE among the multiple UEs that the first relay UE has connected and/or discovered conflicts with the local ID allocated by the second relay UE to the first remote UE, the first message is transmitted to the second remote UE.

According to an exemplary embodiment, the method further includes: the second relay UE transmitting the first message to the second remote UE; the second relay UE receiving a first response message from the second remote UE.

According to an exemplary embodiment, the second relay UE is configured to perform any of the exemplary embodiments of the method described above.

One aspect of the present disclosure provides a method for wireless communication between user equipment (UE), including: a first relay UE forwarding a UE-to-UE relay discovery request message to a second relay UE, the second relay UE being located between the first relay UE and a first remote UE, including: the first relay UE forwarding the UE-to-UE relay discovery request message along with at least a first subset of a UE identifier ID mapping relationship set associated with the first relay UE to the second relay UE.

According to an exemplary embodiment, the UE ID mapping relationship set includes a first mapping relationship between the UE Layer2 identifier L2 ID and the local ID of each UE among a first plurality of UEs that the first relay UE has connected and/or discovered, the local ID of each UE among the first plurality of UEs is uniquely allocated by the first relay UE, and wherein the first subset includes a second mapping relationship between the UE Layer2 identifier L2 ID and the local ID of a second remote UE requesting discovery.

According to an exemplary embodiment, the method further includes: the first relay UE receiving the UE-to-UE relay discovery request message from the second remote UE, wherein the UE-to-UE relay discovery request message includes the respective UE L2 IDs of the second remote UE and the first remote UE; the first relay UE receiving a UE-to-UE relay discovery response message from the second relay UE; and the first relay UE forwarding the UE-to-UE relay discovery response message to the second remote UE.

According to an exemplary embodiment, the UE-to-UE relay discovery response message received by the first relay UE from the second relay UE is transmitted by the second relay UE when it determines that the first mapping relationship includes the UE L2 ID of a UE connected to the second relay UE.

According to an exemplary embodiment, the relay discovery response message includes a second mapping relationship between the UE L2 ID and the local identifier (ID) of each UE among a second plurality of UEs that the second relay UE has linked and/or discovered, wherein the local ID of each UE among the second plurality of UEs is uniquely allocated by the second relay UE, and the second plurality of UEs includes the first remote UE.

According to an exemplary embodiment, the first relay UE forwarding the UE-to-UE relay discovery response message to the second remote UE includes: the first relay UE allocating a local ID to the second remote UE based on the second mapping relationship; the first relay UE forwarding the local ID allocated to the second remote UE and the first mapping relationship between the UE L2 ID and the local ID of the first remote UE along with the UE-to-UE relay discovery response message to the second remote UE.

One aspect of the present disclosure provides a first relay user equipment (UE), the first relay UE being configured to perform any of the exemplary embodiments of the method described above.

One aspect of the present disclosure provides a method for wireless communication between user equipment (UE), including: a second relay UE receiving a UE-to-UE relay discovery request message from a first relay UE, wherein the UE-to-UE relay discovery request message includes the respective UE Layer2 identifiers (L2 ID) of a second remote UE and a first remote UE, the first relay UE being located between the second remote UE and the second relay UE.

According to an exemplary embodiment, the UE-to-UE relay discovery request message includes at least a first subset of a UE identifier (ID) mapping relationship set associated with the first relay UE, the UE ID mapping relationship set includes a first mapping relationship between the UE L2 ID and the local identifier (ID) of each UE among a first plurality of UEs that the first relay UE has connected and/or discovered, the local ID of each UE among the first plurality of UEs is uniquely allocated by the first relay UE, and wherein the first subset includes a mapping relationship between the local ID allocated by the first relay UE to the second remote UE connected to the first relay UE and the UE L2 ID of the second remote UE.

According to an exemplary embodiment, the method further includes the second relay UE transmitting a UE-to-UE relay discovery response message to the first relay UE for the first relay UE to forward the UE-to-UE relay discovery response message to the second remote UE.

According to an exemplary embodiment, the method further includes: the second relay UE determining whether to transmit a first message to a terminal UE connected to the second relay UE based on the UE-to-UE relay discovery request message.

According to an exemplary embodiment, the second relay UE determining whether to transmit a first message to a terminal UE connected to the second relay UE based on the UE-to-UE relay discovery request message includes: determining to transmit the first message to the terminal UE in response to the UE-to-UE relay discovery request message identifying a conflict between a local ID and the local ID allocated by the second relay UE to the terminal UE, wherein the first message includes a new local ID allocated by the second relay UE to the terminal UE.

According to an exemplary embodiment, the method further includes: the second relay UE transmitting the first message to the terminal UE; the second relay UE receiving a first response message from the terminal UE.

According to an exemplary embodiment, the method further includes: the second relay UE finding the first remote UE based on the UE L2 ID of the first remote UE included in the relay discovery request message and forwarding the UE-to-UE relay discovery request message to the first remote UE; the second relay UE receiving a UE-to-UE relay discovery response message from the first remote UE.

According to an exemplary embodiment, the second relay UE forwarding the UE-to-UE relay discovery request message to the first remote UE includes: the second relay UE forwarding the UE-to-UE relay discovery request message along with a second mapping relationship to the first remote UE.

According to an exemplary embodiment, the second mapping relationship includes: a mapping relationship between the UE L2 ID and the local identifier (ID) of each UE among a second plurality of UEs that the second relay UE has connected and/or discovered before finding the first remote UE, wherein the local ID of each UE among the second plurality of UEs is uniquely allocated by the second relay UE, and an additional mapping relationship between the UE L2 ID of the first remote UE and the local ID allocated by the second relay UE to the first remote UE based on the mapping relationship.

According to an exemplary embodiment, the second relay UE transmitting the UE-to-UE relay discovery response message to the first relay UE includes: the second relay UE transmitting the UE-to-UE relay discovery response message along with the second mapping relationship to the first relay UE.

According to an exemplary embodiment, the first relay UE forwarding the UE-to-UE relay discovery response message to the second remote UE includes: the first relay UE allocating a local ID to the second remote UE based on the second mapping relationship received from the first relay UE; the first relay UE forwarding the local ID allocated to the second remote UE and the additional mapping relationship along with the UE-to-UE relay discovery response message to the second remote UE.

One aspect of the present disclosure provides a second relay user equipment (UE), the second relay UE being configured to perform any of the exemplary embodiments of the method described above.

One aspect of the present disclosure provides a method for wireless communication for a first relay user equipment (UE), including: the first relay UE transmitting a first response message to the first remote UE in response to receiving a first message from the connected first remote UE, wherein the first response message includes a local identifier (ID) allocated by the first relay UE to the first remote UE.

According to an exemplary embodiment, it further includes: the first relay UE transmitting a second message to a second relay UE, wherein the second message includes the local ID of the first remote UE.

According to an exemplary embodiment, the second relay UE is connected to a second remote UE, and the second relay UE allocates the local ID to the second remote UE, and wherein the method further includes: the first relay UE receiving a second response message from the second relay UE.

According to an exemplary embodiment, in the case where the local ID allocated by the second relay UE to the second remote UE conflicts with the local ID allocated by the first relay UE to the first remote UE, the second response message includes the second relay UE reallocating a local ID to the first remote UE, and wherein the first response message transmitted by the first relay UE to the first remote UE includes the second relay UE reallocating a local ID to the first remote UE.

According to exemplary embodiments, a third relay UE is also included between the first relay UE and the second relay UE, wherein the first relay UE transmits the second message to the second relay UE by transmitting the second message to the third relay UE. The third relay UE adds all local IDs assigned by the third relay UE to the second message and forwards the resulting message to the second relay UE.

According to exemplary embodiments, the method further includes: the first relay UE receiving a third message from the first remote UE, wherein the third message includes a UE Layer2 identifier (L2 ID) of the second remote UE, which the first remote UE sends to the first relay UE for requesting communication with the second remote UE.

According to exemplary embodiments, the method further includes: the first relay UE, in response to receiving a discovery message broadcast by the second relay UE among the multiple relay UEs, transmitting a fourth message to the second relay UE. The second relay UE is connected to the second remote UE and has assigned the local ID for the second remote UE. The discovery message includes the UE L2 ID of the second remote UE, and the fourth message includes all local IDs assigned by the first relay UE and the UE L2 ID of the second remote UE.

According to exemplary embodiments, the method further includes: the first relay UE receiving a fourth response message from the second relay UE and forwarding the fourth response message to the first remote UE.

According to exemplary embodiments, in the case where the assigned local ID of the second remote UE conflicts with the local ID assigned by the first relay UE for the first remote UE, the fourth response message includes the second relay UE reassigning a local ID for the second remote UE. The fourth response message received by the first relay UE from the second relay UE includes the reassigned local ID for the second remote UE by the second relay UE.

One aspect of the present disclosure provides a first relay user equipment (UE) configured to perform any of the embodiments of the method described above.

One aspect of the present disclosure provides a chip comprising: a processor configured to invoke and run a computer program stored in memory, enabling the device in which the chip is installed to perform any of the embodiments of the method of the present disclosure.

One aspect of the present disclosure provides a computer-readable storage medium storing a computer program, wherein the computer program enables a computer to perform any of the embodiments of the method of the present disclosure.

One aspect of the present disclosure provides a computer program product comprising a computer program, wherein the computer program enables a computer to perform any of the embodiments of the method of the present disclosure.

### BRIEF DESCRIPTION OF DRAWINGS

To more clearly illustrate the embodiments of the present disclosure or related technologies, the following drawings are briefly introduced in the embodiments. It is apparent that the drawings are merely some embodiments of the present disclosure, and those skilled in the art can derive other drawings based on these drawings without creative effort.
FIG. 1 illustrates an exemplary scenario with multi-hop U2U sidelink relay according to some embodiments of the present disclosure.
FIG. 2 illustrates a signaling diagram of sidelink RRC configuration according to some embodiments of the present disclosure.
FIG. 3 illustrates a signaling diagram of a first exemplary multi-hop U2U sidelink relay according to some embodiments of the present disclosure.
FIG. 4 illustrates a signaling diagram of a second exemplary multi-hop U2U sidelink relay according to some embodiments of the present disclosure.
FIG. 5 illustrates an exemplary conflict scenario of multi-hop U2U sidelink relay according to some embodiments of the present disclosure.
FIG. 6 illustrates an exemplary UE Layer2 identifier (UE L2 ID) indication bit according to some embodiments of the present disclosure.
FIG. 7 illustrates a signaling diagram of a third exemplary multi-hop U2U sidelink relay according to some embodiments of the present disclosure.
FIG. 8 illustrates an exemplary SRAP header including a complete UE L2 ID according to some embodiments of the present disclosure.
FIG. 9 illustrates a signaling diagram of a fourth exemplary multi-hop U2U sidelink relay according to some embodiments of the present disclosure.
FIG. 10 illustrates a signaling diagram of a fifth exemplary multi-hop U2U sidelink relay according to some embodiments of the present disclosure.
FIG. 11 is a block diagram of an exemplary system for wireless communication according to embodiments of the present disclosure.

### DETAILED DESCRIPTION OF EMBODIMENTS

The embodiments of the present disclosure are described in detail with reference to the drawings, detailing technical matters, structural features, achieved objectives, and effects as described below. Specifically, the terms in the embodiments of the present disclosure are used solely for the purpose of describing specific embodiments and are not intended to limit the present disclosure.

In the present disclosure, "A or B" can mean "only A," "only B," or "both A and B." In other words, "A or B" can be interpreted as "A and/or B." For example, in the present disclosure, "A, B, or C" can mean "only A," "only B," "only C," or "any combination of A, B, and C."

The slash (/) or comma used in the present disclosure can mean "and/or." For example, "A/B" can mean "A and/or B." Therefore, "A/B" can mean "only A," "only B," or "both A and B." For example, "A, B, C" can mean "A, B, or C."

In the present disclosure, "at least one of A and B" can mean "only A," "only B," or "both A and B." Additionally, in the present disclosure, the expression "at least one of A or B" or "at least one of A and/or B" can be interpreted as "at least one of A and B."

Furthermore, in the present disclosure, "at least one of A, B, and C" can mean "only A," "only B," "only C," or "any combination of A, B, and C." Additionally, "at least one of A, B, or C" or "at least one of A, B, and/or C" can mean "at least one of A, B, and C."

Moreover, the terms "first" and "second" are used solely for descriptive purposes and should not be understood as indicating or implying relative importance or implicitly specifying the number of technical features indicated. Thus, features defined as "first" and "second" may explicitly or implicitly include one or more of the features. In the description of this application, "multiple" means two or more unless explicitly specified otherwise.

The existing technology presents the following problem: if the relay UE assigns IDs, there is an issue of how to ensure that IDs assigned by two or more relay UEs do not duplicate when introducing multi-hop U2U relays.

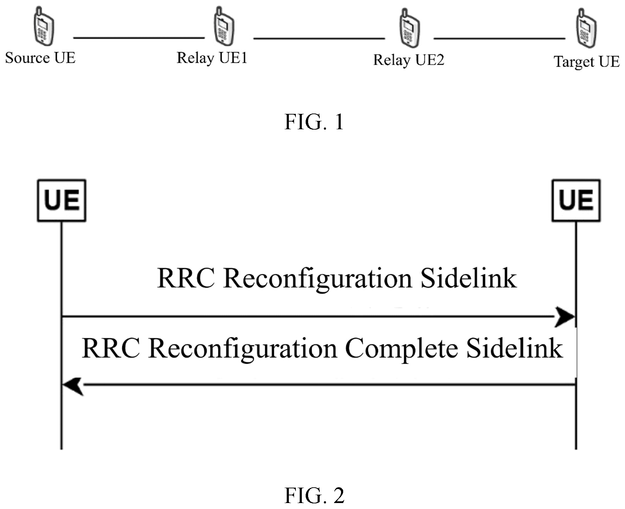

For example, referring to FIG. 1, when a source UE (also referred to as a source remote UE or second remote UE in this disclosure) establishes a connection with relay UE1, relay UE1 assigns a local ID to the source UE. However, when relay UE1 (also referred to as the first relay UE in this disclosure) establishes a connection with relay UE2 (also referred to as the second relay UE in this disclosure), should relay UE1 or relay UE2 assign the ID? Assuming relay UE2 assigns it, this may lead to a conflict between the UE ID assigned by relay UE1 to the source UE and the UE ID assigned by relay UE2 to the target UE (also referred to as the target remote UE in this disclosure). Similarly, if the target UE is not considered, relay UE1 assigns a local ID to the source UE, and relay UE2 assigns a local ID to itself, which may also result in a conflict. The issue of how to avoid ID conflicts in multi-hop U2U relays needs to be addressed.

Therefore, the present disclosure proposes a more efficient and simple method to achieve local identifier (ID) allocation in multi-hop sidelink UE-to-UE relays.

Thus, the present disclosure proposes a method for wireless communication between user equipment (UE). This method can be used for local identifier allocation in multi-hop sidelink UE-to-UE relays, ensuring that local identifier IDs assigned by multiple relay UEs are unique, thereby reducing the occurrence of local ID conflicts and improving communication efficiency.

In some embodiments, user equipment (UE) can be distributed throughout a wireless communication network, and the UE can be fixed or mobile. The UE can also be referred to as a terminal, mobile station, subscriber unit, station, etc. UE 115 can be a cellular phone, personal digital assistant (PDA), wireless modem, wireless communication device, handheld device, tablet computer, laptop computer, cordless phone, wireless local loop (WLL) station, etc. In one aspect, UE 115 can be a device including a universal integrated circuit card (UICC). In another aspect, the UE can be a device not including a UICC. In some aspects, a UE 115 not including a UICC can also be referred to as an IoT device or Internet of Everything (IoE) device. Although the UE is illustrated as a mobile smart phone type device in the wireless communication network in various drawings, the UE can also be a machine specifically configured for connected communication, including machine-type communication (MTC), enhanced MTC (eMTC), narrowband IoT (NB-IoT), etc. Furthermore, the UE can communicate with any type of base station node (such as gNB) and can also communicate with any type of other UE.

As used in this disclosure, the terms "source user terminal (UE)," "target UE," and "remote UE" are relative to the relay UE. In some cases, unless specifically indicated, the terms "source UE," "target UE," and/or "remote UE" can be used interchangeably.

FIG. 1 illustrates an exemplary scenario with multi-hop U2U sidelink relay according to some embodiments of the present disclosure. As shown, relay UE1 and relay UE2 need to establish a connection (e.g., radio resource control RRC connection). According to the current sidelink RRC connection establishment process (see 38.331), there is no master-slave UE relationship, and any UE can initiate the link configuration process (e.g., RRC reconfiguration sidelink RRCReconfigurationSidelink process).

In some embodiments of the present disclosure, a UE will be designated to resolve conflicts. FIG. 2 illustrates a signaling diagram of sidelink RRC configuration according to some embodiments of the present disclosure. Referring to FIG. 2, assume that in the 38.331 specification, the UE initiating the RRCReconfigurationSidelink is designated as the slave relay UE, and the UE initiating the RRC reconfiguration complete sidelink RRCReconfigurationCompleteSidelink is designated as the master relay UE.

The RRCReconfigurationSidelink process does not involve the interaction of Layer2 UE identifiers (L2 UE ID). The interaction of Layer2 UE IDs occurs during the discovery process. However, since the present disclosure requires coordination of local IDs, the issue of local ID conflicts cannot be resolved at the discovery layer. This is because the discovery layer is not a confirmed message layer. Local IDs should be allocated by PC5-RRC. Therefore, the first to third exemplary multi-hop U2U sidelink relay signaling diagrams of the present invention correspond to the coordination of local ID allocation at the PC5-RRC layer.

In some embodiments of the present disclosure, the slave UE carries all already assigned remote UE IDs in the configuration message (such as RRCReconfigurationSidelink message, etc.). Upon receiving the configuration message (such as RRCReconfigurationSidelink message, etc.), if there is a conflict between the UE ID assigned by the master relay UE and the UE ID assigned by the slave relay UE, the master relay UE will send a new UE ID and the old conflicting UE ID to the slave relay UE. The slave relay UE will then update the source UE's ID.

In some embodiments of the present disclosure, the slave UE carries the assigned UE ID of one remote UE in the configuration message (such as RRCReconfigurationSidelink message, etc.). Exemplarily, the remote UE can be the UE requesting discovery (e.g., requesting discovery of other remote UEs).

In some embodiments of the present disclosure, the SRAP header contains the local ID of the sending UE and the local ID of the next hop, rather than the original source local ID and the final target local ID. Therefore, each relay UE needs to interact with other relay UEs to update the assigned local ID but does not need to transmit the source local ID and target local ID across the entire link. Accordingly, the source UE may not know the local ID of the target UE.

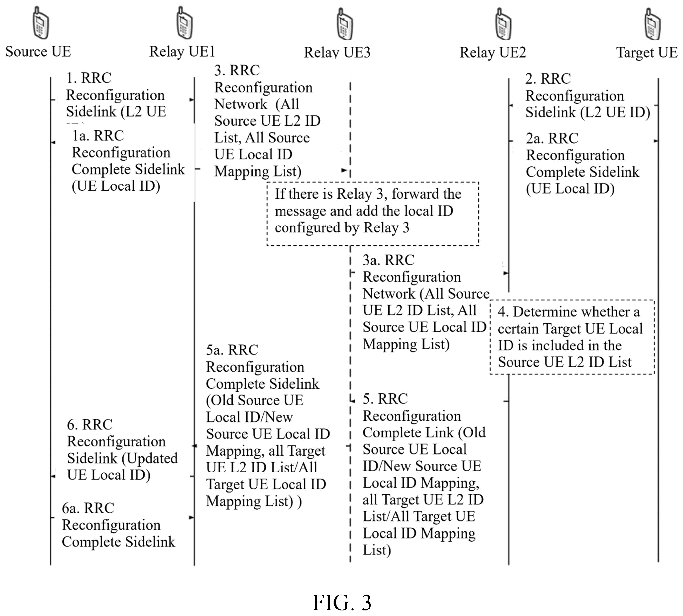

FIG. 3 illustrates a signaling diagram of a first exemplary multi-hop U2U sidelink relay according to some embodiments of the present disclosure.

Exemplary Step or Signaling 1: A source UE sends an RRCReconfiguration message to a relay UE1, which carries a complete L2 UE ID (Note: The L2 UE ID has already been exchanged during the previous discovery process, so in some cases, it may not need to be carried again).

Exemplary Step or Signaling 1a: The relay UE1 assigns a local ID to the source UE and sends its own local ID to the source UE.

Exemplary Steps or Signaling 2, 2a: Repeat the steps or signaling 1, 1a respectively.

Exemplary Step or Signaling 3: The relay UE1 and relay UE2 need to establish a connection. Assume that the relay UE1 sends an RRCReconfigurationSidelink message to relay UE2 (in some cases, it may include a list of all source UEs' L2 UE IDs and local ID lists, while in other cases, it may include only one or a given number of source UEs' Layer2 UE ID lists and local ID lists). The relay UE1 needs to send its assigned local ID and the corresponding number of (source) remote UEs' local IDs connected to relay UE1 to relay UE2 to resolve potential local ID conflicts.

It should be noted here that the number of source UE's L2 UE ID and local ID pairs included in the configuration message (such as the RRCReconfigurationSidelink message) sent by relay UE1 to relay UE2, when equal to one, corresponds to the first subset in the exemplary embodiment of this disclosure. That is, the concept of the first subset (i.e., the number of mappings between L2 UE ID and local ID in the message sent by relay UE, such as relay UE1, e.g., configuration message, etc.) can also be applied to other examples, other embodiments, or other exemplary embodiments of this disclosure. This disclosure is not intended to limit the first subset to the embodiment where it appears in text, nor is it limited to any message (including response messages, acknowledgment ACK messages, completion messages, etc.).

Exemplary Step or Signaling 4: Relay UE2 determines whether there is a local ID conflict with the local ID it has assigned.

Exemplary Step or Signaling 5: If there is a conflict, relay UE2 resolves the conflict (in this case, it is specified that the relay UE receiving the RRCReconfigurationSidelink message resolves the local ID conflict). Relay UE2 sends an RRCReconfigurationCompleteSidelink message to relay UE1 (including the old local ID/new local ID/source UE's UE L2 ID mapping of the source UE, as well as the UE L2 ID list and local ID mapping list of all target UEs). The message includes the UE L2 ID and local ID of the source UE that has been reassigned a local ID, as well as the UE L2 ID list and local ID mapping list of all UEs connected to relay UE2 (target UEs).

Exemplary Step or Signaling 6: If there is a conflict and the modified local ID has been obtained from relay UE2, relay UE1 will send an RRCReconfigurationSidelink message to the source remote UE, including the newly assigned local ID.

Exemplary Step or Signaling 6a: The source UE sends an RRCReconfigurationCompleteSidelink message to relay UE1.

Optional, Exemplary Step or Signaling 3a: When there is a relay UE3 between relay UE1 and relay UE2, relay UE3 will add the local ID assigned by relay 3 when forwarding signaling 3 to relay UE2 to assist relay UE2 in resolving local ID conflicts. That is, when a local ID conflict occurs and relay UE2 needs to resolve the local ID conflict, the local ID reassigned by relay UE2 for the UE(s) with a local ID conflict will not only avoid conflicts with the local ID assigned by relay UE1 to itself and the local ID of the source remote UE connected to relay UE1 but also avoid conflicts with the local ID assigned by relay UE3, thereby improving the efficiency of local ID conflict resolution.

Optional, Exemplary Step or Signaling 5a: When there is a relay UE3 between relay UE1 and relay UE2, since the conflict is resolved by relay UE2 rather than by relay UE1 when a local ID conflict occurs, relay UE3 can forward signaling 5 to relay UE1.

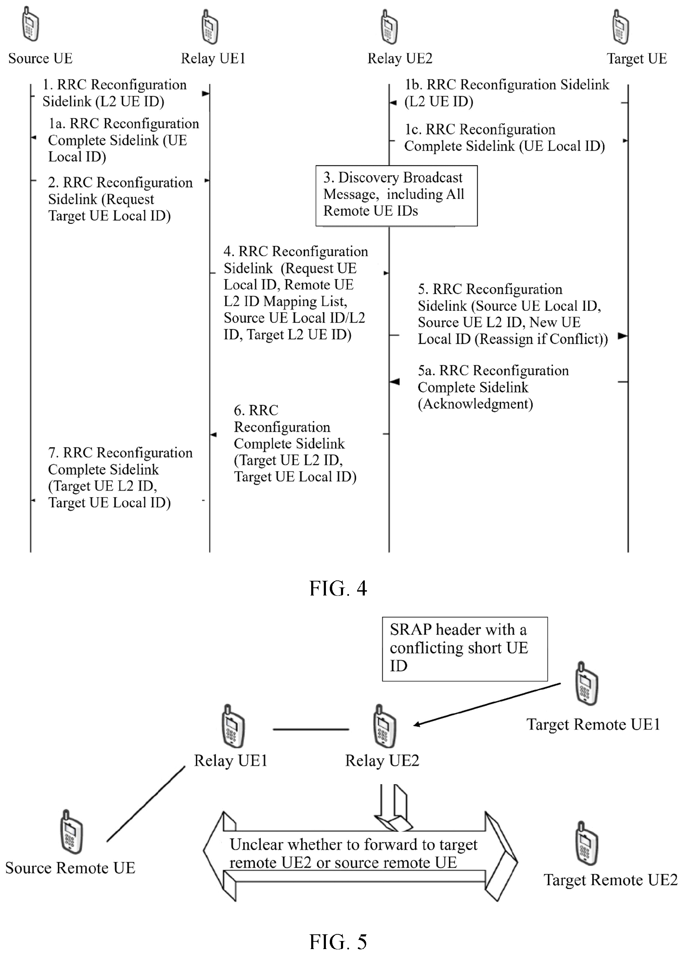

FIG. 4 illustrates a signaling diagram of a second exemplary multi-hop U2U sidelink relay according to some embodiments of this disclosure.

The key points of this embodiment are as follows:
1. How to send the local ID of the target remote UE to the source UE, and how to send the local ID of the source remote UE to the target remote UE.
2. Relay UE1 needs to know that the ID of the target UE is attached to relay UE2 to correctly send the source UE's data to relay UE2.

Exemplary Steps or Signaling 1-1c: Relay UE1 and relay UE2 respectively assign local IDs to the source remote UE and the target remote UE through configuration messages (e.g., RRCReconfigurationSidelink messages).

Exemplary Step or Signaling 2: When the source UE needs to discover and communicate with the target UE, the source UE sends a configuration message (e.g., RRCReconfigurationSidelink message) to relay UE1 (to request the local ID of the target UE) and sends the Layer2 ID of the target UE to relay UE1 to request the local ID of the target UE. Relay UE1 is responsible for finding a relay UE that can connect to the target remote UE.

Exemplary Step or Signaling 3: Relay UE2 includes the UE L2 IDs of all target UEs in the broadcast discovery message.

Exemplary Step or Signaling 4: When relay UE1 discovers that the broadcast discovery message from relay UE2 contains the UE L2 ID of the target UE, relay UE1 decides to establish a connection (such as an RRC connection) with relay UE2. In this connection, relay UE1 needs to obtain the local ID of the target remote UE and inform the target remote UE of the local ID of the source remote UE. Therefore, relay UE1 sends a configuration message (such as an RRCReconfigurationSidelink message) (which includes the local ID/UE L2 ID mapping list of the remote UE, the local ID/UE L2 ID of the source remote UE, and the UE L2 ID of the target UE).

Now referring to Figure 5. Figure 5 illustrates an exemplary conflict scenario of a multi-hop U2U sidelink relay according to some embodiments of this disclosure.

As shown in the figure, it should be noted that relay UE2 determines whether the local ID of the source remote UE conflicts with the local ID of a UE carried by relay UE2. The UE here is not limited to the target UE specified by the source remote UE (e.g., target remote UE2 in Figure 5), because when relay UE2 receives an SRAP PDU sent by another UE without conflict (e.g., target remote UE1 in FIG. 5), if the ID of the target UE conflicts with the ID of the source remote UE of relay UE1, relay UE2 will not be able to determine which is the real target UE.

Therefore, when handling conflicts, relay UE2 needs to comprehensively consider the target UE specified by the source remote UE and other possible UEs to ensure the correct resolution of the target UE's ID and proper communication.

Returning to FIG. 4. Exemplary Step or Signaling 5: If relay UE2 finds that the local ID of the remote UE conflicts with the local ID of the target UE, relay UE2 will send a configuration message (such as an RRCReconfigurationSidelink message) to reassign the local ID. Otherwise, relay UE2 will pass the local ID and UE L2 ID of the source remote UE and all remote UEs connected to relay UE1 to the target remote UE.

Exemplary Step or Signaling 5a: The target UE sends an acknowledgment message (such as an RRCReconfigurationCompleteSidelink message) to relay UE2.

Exemplary Step or Signaling 6: Relay UE2 sends a configuration acknowledgment message (such as an RRCReconfigurationCompleteSidelink message) to relay UE1 to convey the UE L2 ID and local ID of the target UE.

Exemplary Step or Signaling 7: Relay UE1 sends a configuration acknowledgment message (such as an RRCReconfigurationCompleteSidelink message) to the source remote UE1 to convey the UE L2 ID and local ID of the target UE.

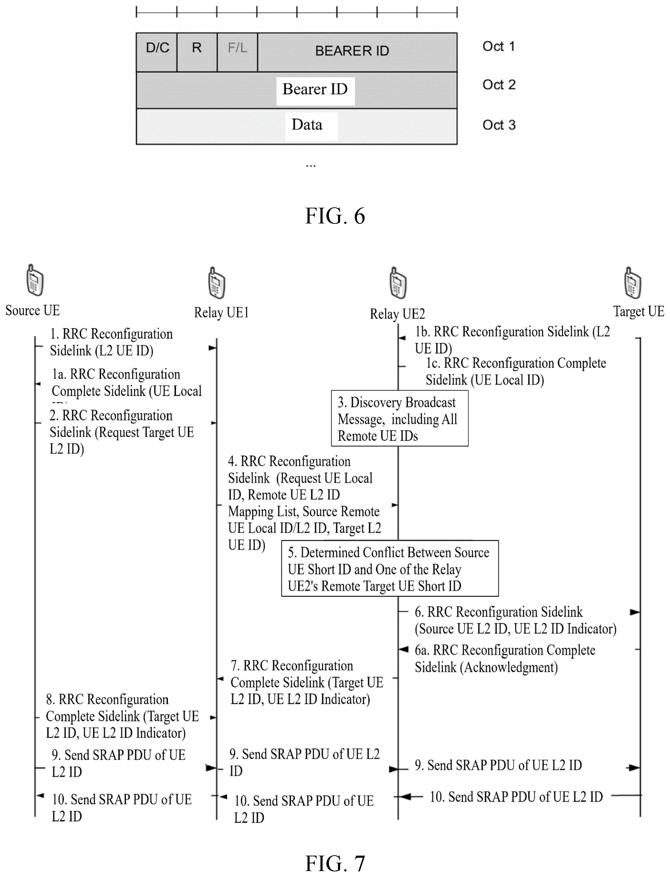

FIG. 6 illustrates an exemplary UE Layer2 identifier (UE L2 ID) indicator bit according to some embodiments of this disclosure.

The purpose of introducing a local ID is to reduce signaling overhead on the sidelink. If a local ID conflict occurs, the complete UE L2 ID will be used in the SRAP.

When using the complete UE L2 ID, the following two points need to be noted:

It is necessary to indicate in the SRAP that the source remote UE and the target remote UE use the UE L2 ID. This ensures the correct identification and handling of the source UE and target UE identities during communication.

In the SRAP header in FIG. 6, the second R bit is used to indicate whether the complete UE L2 ID or the UE local ID is used. Of course, in other implementations, new bits or existing bits can be used to indicate whether the complete UE L2 ID or the UE local ID is used, and this disclosure does not impose any limitations on this.

2. It is necessary to indicate that the source remote UE uses the complete UE L2 ID when setting the source/target ID in the SRAP. First, relay UE1 obtains the local ID of the target remote UE from relay UE2, then discovers that the local ID of the source remote UE and the target remote UE conflict. Therefore, relay UE1 notifies the source remote UE and the target remote UE through relay UE2 to use the complete UE L2 ID in this communication.

By using, for example, but not limited to, the second R bit to indicate the type of ID used, and through negotiation and notification during the communication process, it can be ensured that the IDs of the source UE and target UE are correctly set in the SRAP, and potential conflict issues are resolved.

FIG. 7 illustrates a signaling diagram of a third exemplary multi-hop U2U sidelink relay according to some embodiments of this disclosure.

Exemplary Step or Signaling 1: Relay UE1 and relay UE2 respectively assign local IDs to the source remote UE and the target remote UE.

Exemplary Step or Signaling 2: When the source UE needs to discover and communicate with the target UE, the source UE sends a message to relay UE1, sending the UE L2 ID of the target UE to relay UE1, and relay UE1 finds a relay UE that can connect to the target remote UE.

Exemplary Step or Signaling 3: Relay UE2 includes the UE L2 IDs of all target UEs in the broadcast discovery message.

Exemplary Step or Signaling 4: When relay UE1 discovers that the broadcast discovery message from relay UE2 contains the UE L2 ID of the target UE, it decides to establish an RRC connection with relay UE2. In this RRC connection, it is necessary to obtain the local ID of the target remote UE from relay UE2 and inform the target remote UE of the local ID of the source remote UE. Therefore, a configuration message (such as an RRCReconfigurationSidelink message) is sent (which includes the local ID/UE L2 ID mapping list of the remote UE, the local ID/UE L2 ID of the source remote UE, and the UE L2 ID of the target UE).

Exemplary Step or Signaling 5: Relay UE2 determines whether the local ID of the source remote UE conflicts with the local ID of a UE it carries. If relay UE2 finds that the local ID of the remote UE conflicts with the local ID of the target UE, relay UE2 will instruct the target UE to use the UE L2 ID when sending to the source UE.

Exemplary Step or Signaling 6: Relay UE2 sends a configuration message (such as an RRCReconfigurationSidelink message) to the target remote UE (which includes the UE L2 ID of the source UE, UE L2 ID indicator). The purpose of this message is to notify the target remote UE to use the complete UE L2 ID when sending to the source UE.

Exemplary Step or Signaling 7: Relay UE2 sends a configuration completion message (such as an RRCReconfigurationCompleteSidelink message) to relay UE1 (which includes the UE L2 ID of the target UE, UE L2 ID indicator) to notify the use of the complete UE L2 ID for a specific target UE.

Exemplary Step or Signaling 8: Relay UE1 sends a configuration message (such as an RRCReconfigurationSidelink message) to the source remote UE (which includes the UE L2 ID of the target UE, UE L2 ID indicator) to notify the use of the complete UE L2 ID for a specific target UE.

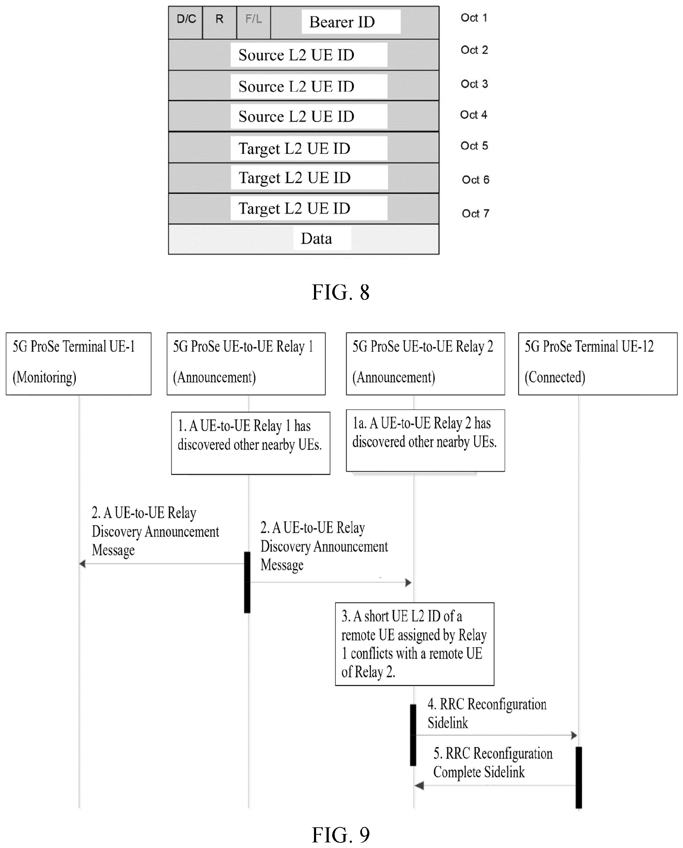

Therefore, an enhanced SRAP header is needed. Figure 8 illustrates an exemplary SRAP header including the complete UE L2 ID according to some embodiments of this disclosure. As shown in the figure, a bit F/L is used to indicate whether the complete UE L2 ID or the local ID is used.

Thus, through appropriate indication and notification, it is ensured that the IDs of the source UE and target UE are correctly set during the communication process, and potential conflict issues are resolved.

In a relay system, each remote UE's UE local ID is assigned by its connected relay UE. Therefore, conflict resolution is likely to be handled by the relay UE itself.

In the existing discovery mechanism, the 23.304 standard introduces two discovery models, namely Model A and Model B:
Model A: The relay UE broadcasts discovery messages to inform other relay UEs and remote UEs about the target UE it is connected to. Other relay UEs and remote UEs can use this information to decide whether to establish a connection with the target UE.
Model B: The relay UE actively discovers the target UE by sending a discovery request message to it. Upon receiving the request, the target UE can choose to establish a connection with the relay UE.

These two discovery models provide different ways to discover and establish connections.

FIG. 9 illustrates a signaling diagram of a fourth exemplary multi-hop U2U sidelink relay according to some embodiments of this disclosure. FIG. 9 presents the conflict resolution method corresponding to Model A.

Exemplarily, Step or Signaling 1, 1a: UE-to-UE Relay 1 and Relay 2 have discovered other neighboring UEs.

Exemplarily, Step or Signaling 2: Relay UE1 includes a mapping table of all connected or discovered UEs' UE L2 IDs and UE local IDs in the discovery announcement message. This provides a complete list, enabling other devices to understand the identification information of UEs connected to Relay UE1. It should be noted that due to various factors, this process may face a high risk of failure and/or significant signaling overhead. In practice, the decision to include the mapping table of all connected or discovered UEs' UE L2 IDs and UE local IDs in the discovery announcement message depends on the trade-off between local ID conflict resolution and signaling overhead.

In some embodiments of this disclosure, the mapping table of a connected or discovered UE's UE L2 ID and UE local ID can be included in the discovery announcement message or other messages (such as configuration messages), instead of including the mapping table of all connected or discovered UEs' UE L2 IDs and UE local IDs, thereby effectively reducing signaling overhead.

Relay UE2 determines that the UE local ID assigned by Relay UE1 conflicts with the UE local ID it assigned to some remote UEs (e.g., remote UE2). When a conflict is detected, Relay UE2 needs to take measures to resolve the conflict to ensure that each UE's identification is unique.

Exemplarily, Step or Signaling 3: Relay UE2 reassigns a local ID to terminal UE2 (also referred to as the first remote UE in this disclosure). This is to resolve the conflict issue and ensure that terminal UE2 has an identification that does not conflict with other UEs. By reassigning the local ID, the conflict can be eliminated, ensuring correct identification and connection during the communication process.

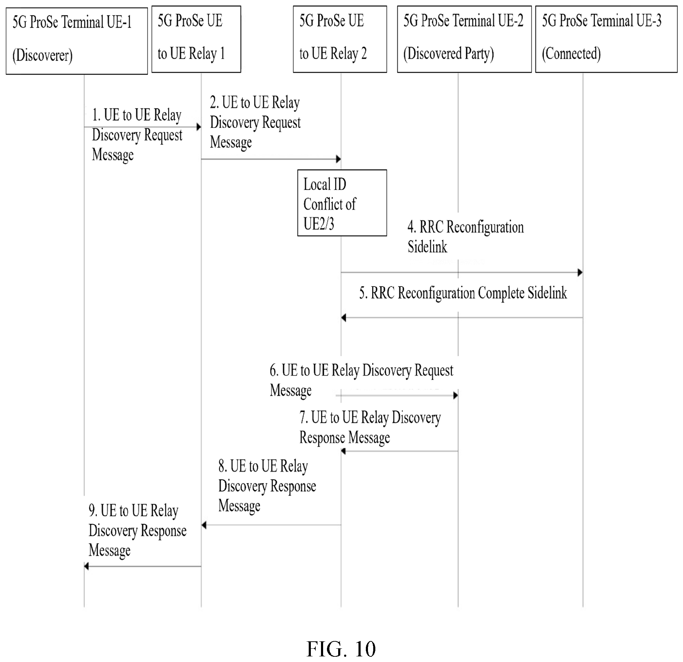

FIG. 10 illustrates a signaling diagram of a fifth exemplary multi-hop U2U sidelink relay according to some embodiments of this disclosure.

Exemplarily, Step or Signaling 1: As the discoverer, terminal UE1 sends a UE-to-UE relay discovery request message to Relay UE1.

Exemplarily, Step or Signaling 2: In the original UE-to-UE relay discovery request message, only the source remote UE and target remote UE's UE L2 IDs are included. However, when Relay UE1 forwards the message, to resolve the conflict issue, Relay UE1 needs to add a mapping table containing all connected and/or discovered UEs' UE L2 IDs and local IDs to the message. This provides a complete list, enabling other devices to understand the identification information of UEs connected to Relay UE1.

Exemplarily, Step or Signaling 3: Relay UE2 determines that part of the local ID conflicts with the local IDs it assigned to terminal UE3 and terminal UE2. When a conflict is detected, Relay UE2 needs to take measures to resolve the conflict to ensure that each UE's identification is unique.

Exemplarily, Step or Signaling 4/5: Relay UE2 reassigns a local ID to terminal UE3. This is to resolve the conflict issue and ensure that terminal UE3 has an identification that does not conflict with other UEs. By reassigning the UE local ID, the conflict can be eliminated, ensuring correct identification and connection during the communication process.

Exemplarily, Step or Signaling 6: Add the mapping of UE L2 ID and local ID in the UE-to-UE relay discovery request message. This adds a scheme for assigning UE local IDs in the discovery request message.

Exemplarily, Step or Signaling 7: Terminal UE2 confirms the assigned local ID.

Exemplarily, Step or Signaling 8: Relay UE2 adds the mapping of all currently assigned UEs' UE L2 IDs and local IDs in the UE-to-UE relay discovery response message.

Exemplarily, Step or Signaling 9: Relay UE1 sends a UE-to-UE relay discovery response message to terminal UE1, which only includes the local ID assigned to terminal UE1, as well as the mapping of the target terminal UE2's local ID and UE L2 ID.

It should be noted that the steps of the above embodiments are merely exemplary and do not limit the scope of the invention. Various modifications and variations can be made to the steps without departing from the spirit and scope of the invention.

The order of the described steps (signaling/blocks) is not intended to be understood as limiting, and any number of the described steps (signaling/blocks) can be skipped or combined in any order to implement the method or alternative methods.

This disclosure describes examples of communication between terminal devices (such as remote UEs, e.g., source UE and target UE) and relay devices (such as relay UEs) in the above embodiments, mainly for exemplary purposes and not as limitations.

The order of the described steps (signaling/blocks) is not intended to be interpreted as limiting, and any number of the described steps (signaling/blocks) can be skipped or combined in any order to implement the method or alternative methods. Generally, any of the components, modules, methods, and operations described herein can be implemented using software, firmware, hardware (e.g., fixed logic circuits), manual processing, or any combination thereof. Some operations of the exemplary methods can be described in the general context of executable instructions stored on computer-readable storage media locally and/or remotely on a computer processing system, and embodiments can include software applications, programs, functions, etc. Alternatively or additionally, any function described herein can be performed at least partially by one or more hardware logic components, such as but not limited to field-programmable gate arrays (FPGAs), application-specific integrated circuits (ASICs), application-specific standard products (ASSPs), system-on-chips (SoCs), complex programmable logic devices (CPLDs), etc.

Furthermore, the signaling transmission described in the embodiments of this disclosure can be implemented in any manner known in the art. For example, signaling transmission can be explicit and/or implicit. Additionally, the illustrated steps (signaling/blocks) are for exemplary purposes only and are not intended to limit this application.

Various aspects of the invention can be understood from the following enumerated exemplary embodiments:
According to an exemplary embodiment, a wireless communication method for user equipment (UE) is provided, including: a second relay UE receiving a UE-to-UE relay discovery announcement message from a first relay UE; the second relay UE determining whether to transmit a first message to a first remote UE connected to the second relay UE based on the UE-to-UE relay discovery announcement message, wherein the first message is used for the second relay UE to reassign a local ID to the first remote UE.

According to an exemplary embodiment, the UE-to-UE relay discovery announcement message includes at least a first subset of a UE identifier (ID) mapping relationship set associated with the first relay UE, the UE ID mapping relationship set includes the mapping relationship between the UE Layer2 identifier (L2 ID) and the local ID of each UE among multiple UEs connected and/or discovered by the first relay UE, wherein the local ID of each UE among the multiple UEs is uniquely assigned by the first relay UE, and wherein the first subset includes the mapping relationship between the local ID assigned by the first relay UE to the first remote UE connected to the first relay UE and the UE L2 ID of the first remote UE.

According to an exemplary embodiment, the second relay UE determining whether to transmit a first message to a second remote UE connected to the second relay UE based on the UE-to-UE relay discovery announcement message includes: transmitting the first message to the second remote UE when the local ID of one UE among the multiple UEs connected and/or discovered by the first relay UE conflicts with the local ID assigned by the second relay UE to the first remote UE.

According to an exemplary embodiment, the method further includes: transmitting the first message to the second remote UE by the second relay UE; receiving a first response message from the second remote UE by the second relay UE.

According to an exemplary embodiment, the second relay UE is configured to perform any of the exemplary embodiments of the method described above.

According to an exemplary embodiment, a wireless communication method for user equipment (UE) is provided, including: a first relay UE forwarding a UE-to-UE relay discovery request message to a second relay UE, the second relay UE being located between the first relay UE and a first remote UE, including: forwarding the UE-to-UE relay discovery request message along with at least a first subset of a UE identifier ID mapping relationship set associated with the first relay UE to the second relay UE by the first relay UE.

It can be understood that the first subset can also be applicable to other examples, other embodiments, or other exemplary embodiments of this disclosure, and this disclosure is not intended to limit the first subset to the embodiments where it appears textually.

According to an exemplary embodiment, the UE ID mapping relationship set includes the first mapping relationship between the UE Layer2 identifier L2 ID and the local ID of each UE among the first multiple UEs connected and/or discovered by the first relay UE, the local ID of each UE among the first multiple UEs is uniquely assigned by the first relay UE, and wherein the first subset includes the second mapping relationship between the UE Layer2 identifier L2 ID and the local ID of the second remote UE requesting discovery.

According to an exemplary embodiment, the method further includes: the first relay UE receiving the UE-to-UE relay discovery request message from the second remote UE, wherein the UE-to-UE relay discovery request message includes the UE L2 IDs of the second remote UE and the first remote UE; receiving a UE-to-UE relay discovery response message from the second relay UE by the first relay UE; and forwarding the UE-to-UE relay discovery response message to the second remote UE by the first relay UE.

According to an exemplary embodiment, the UE-to-UE relay discovery response message received by the first relay UE from the second relay UE is transmitted by the second relay UE when it determines that the first mapping relationship includes the UE L2 ID of a UE connected to the second relay UE.

According to an exemplary embodiment, the relay discovery response message includes the second mapping relationship between the UE L2 ID and the local identifier (ID) of each UE among the second multiple UEs linked and/or discovered by the second relay UE, wherein the local ID of each UE among the second multiple UEs is uniquely assigned by the second relay UE, and the second multiple UEs include the first remote UE.

According to an exemplary embodiment, forwarding the UE-to-UE relay discovery response message to the second remote UE by the first relay UE includes: assigning a local ID to the second remote UE based on the second mapping relationship by the first relay UE; forwarding the local ID assigned to the second remote UE and the first mapping relationship between the UE L2 ID and the local ID of the first remote UE along with the UE-to-UE relay discovery response message to the second remote UE by the first relay UE.

According to an exemplary embodiment, a first relay user equipment (UE) is provided, the first relay UE being configured to perform any of the embodiments of the method described above.

According to an exemplary embodiment, a wireless communication method for user equipment (UE) is provided, including: a second relay UE receiving a UE-to-UE relay discovery request message from a first relay UE, wherein the UE-to-UE relay discovery request message includes the UE Layer2 identifiers (L2 IDs) of the second remote UE and the first remote UE, the first relay UE being located between the second remote UE and the second relay UE.

According to an exemplary embodiment, the UE-to-UE relay discovery request message includes at least a first subset of a UE identifier (ID) mapping relationship set associated with the first relay UE, the UE ID mapping relationship set includes the first mapping relationship between the UE L2 ID and the local identifier (ID) of each UE among the first multiple UEs connected and/or discovered by the first relay UE, the local ID of each UE among the first multiple UEs is uniquely assigned by the first relay UE, and wherein the first subset includes the mapping relationship between the local ID assigned by the first relay UE to the second remote UE connected to the first relay UE and the UE L2 ID of the second remote UE.

According to an exemplary embodiment, the aforementioned method further includes the second relay UE transmitting a UE-to-UE relay discovery response message to the first relay UE, for the first relay UE to forward the UE-to-UE relay discovery response message to the second remote UE.

According to an exemplary embodiment, the aforementioned method further includes: the second relay UE determining whether to transmit a first message to a terminal UE connected to the second relay UE based on the UE-to-UE relay discovery request message.

According to an exemplary embodiment, the second relay UE determining whether to transmit a first message to a terminal UE connected to the second relay UE based on the UE-to-UE relay discovery request message includes: determining to transmit a first message to the terminal UE in response to the UE-to-UE relay discovery request message identifying a conflict between a local ID and the local ID assigned to the terminal UE by the second relay UE, wherein the first message includes a new local ID assigned to the terminal UE by the second relay UE.

According to an exemplary embodiment, the aforementioned method further includes: the second relay UE transmitting the first message to the terminal UE; the second relay UE receiving a first response message from the terminal UE.

According to an exemplary embodiment, the aforementioned method further includes: the second relay UE finding the first remote UE based on the UE L2 ID of the first remote UE included in the relay discovery request message, and forwarding the UE-to-UE relay discovery request message to the first remote UE; the second relay UE receiving a UE-to-UE relay discovery response message from the first remote UE.

According to an exemplary embodiment, the second relay UE forwarding the UE-to-UE relay discovery request message to the first remote UE includes: the second relay UE forwarding the UE-to-UE relay discovery request message along with a second mapping relationship to the first remote UE.

According to an exemplary embodiment, the second mapping relationship includes: a mapping relationship between the UE L2 ID of each UE in a second plurality of UEs that the second relay UE has connected to and/or discovered before finding the first remote UE and a local identifier (ID), wherein the local ID of each UE in the second plurality of UEs is uniquely assigned by the second relay UE, and an additional mapping relationship between the UE L2 ID of the first remote UE and the local ID assigned to the first remote UE by the second relay UE based on the mapping relationship.

According to an exemplary embodiment, the second relay UE transmitting the UE-to-UE relay discovery response message to the first relay UE includes: the second relay UE transmitting the UE-to-UE relay discovery response message along with the second mapping relationship to the first relay UE.

According to an exemplary embodiment, the first relay UE forwarding the UE-to-UE relay discovery response message to the second remote UE includes: the first relay UE assigning a local ID to the second remote UE based on the second mapping relationship received from the first relay UE; the first relay UE forwarding the local ID assigned to the second remote UE and the additional mapping relationship along with the UE-to-UE relay discovery response message to the second remote UE.

According to an exemplary embodiment, a second relay user equipment (UE) is provided, configured to perform any of the embodiments of the aforementioned method.

According to an exemplary embodiment, a wireless communication method for a first relay user equipment (UE) is provided, including: the first relay UE transmitting a first response message to the first remote UE in response to receiving a first message from the connected first remote UE, wherein the first response message includes a local identifier (ID) assigned to the first remote UE by the first relay UE.

According to an exemplary embodiment, it further includes: the first relay UE transmitting a second message to the second relay UE, wherein the second message includes the local ID of the first remote UE.

According to an exemplary embodiment, the second relay UE is connected to a second remote UE, and the second relay UE assigns the local ID to the second remote UE, and wherein the method further includes: the first relay UE receiving a second response message from the second relay UE.

According to an exemplary embodiment, in the case where the local ID assigned to the second remote UE by the second relay UE conflicts with the local ID assigned to the first remote UE by the first relay UE, the second response message includes the second relay UE reassigning a local ID to the first remote UE, and wherein the first response message transmitted by the first relay UE to the first remote UE includes the second relay UE reassigning a local ID to the first remote UE.

According to an exemplary embodiment, between the first relay UE and the second relay UE, there is also a third relay UE, and wherein the first relay UE transmitting the second message to the second relay UE includes: the first relay UE transmitting the second message to the third relay UE, for the third relay UE to add all local IDs assigned by the third relay UE to the second message, and transmit the resulting message to the second relay UE.

According to an exemplary embodiment, the aforementioned method further includes: the first relay UE receiving a third message from the first remote UE, wherein the third message includes a UE Layer2 identifier (L2 ID) of a second remote UE that the first remote UE requests to communicate with the first relay UE.

According to an exemplary embodiment, the aforementioned method further includes: the first relay UE transmitting a fourth message to the second relay UE in response to receiving a discovery message broadcast by the second relay UE among the plurality of relay UEs, wherein the second relay UE is connected to the second remote UE, and the second relay UE has assigned the local ID to the second remote UE, and the discovery message includes the UE L2 ID of the second remote UE, and wherein the fourth message includes all local IDs assigned by the first relay UE and the UE L2 ID of the second remote UE.

According to an exemplary embodiment, the aforementioned method further includes: the first relay UE receiving a fourth response message from the second relay UE and forwarding the fourth response message to the first remote UE.

According to an exemplary embodiment, in the case where the assigned local ID of the second remote UE conflicts with the local ID assigned to the first remote UE by the first relay UE, the fourth response message includes the second relay UE reassigning a local ID to the second remote UE, and wherein the fourth response message received by the first relay UE from the second relay UE includes the second relay UE reassigning a local ID to the second remote UE.

According to an exemplary embodiment, a first relay user equipment (UE) is provided, configured to perform any of the embodiments of the aforementioned method.

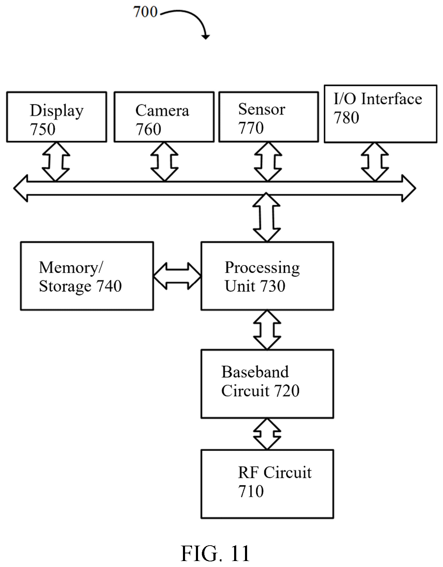

FIG. 11 is a block diagram of an example system 700 for wireless communication according to an embodiment of the present disclosure. Any suitably configured hardware and/or software may be used to implement the embodiments described herein into the system. FIG. 11 illustrates system 700, including a radio frequency (RF) circuit 710, a baseband circuit 720, a processing unit 730, memory/storage 740, a display 750, a camera 760, sensors 770, and input/output (I/O) interfaces 780, as shown, coupled to each other.

The processing unit 730 may include circuits, such as but not limited to one or more single-core or multi-core processors. The processor may include any combination of general-purpose processors and special-purpose processors, such as graphics processors and application processors. The processor may be coupled to memory/storage and configured to execute instructions stored in the memory/storage to enable various applications and/or operating systems to run on the system. RF circuit 710, baseband circuit 720, processing unit 730, memory/storage 740, display 750, camera 760, sensors 770, and I/O interface 780 are known elements in system 700, such as but not limited to laptop computing devices, tablet computing devices, netbooks, ultrabooks, smartphones, etc. Additionally, instructions as a software product may be stored in a computer-readable storage medium. The software product in the computer is stored in the storage medium, including multiple commands for computing devices (such as personal computers, servers, or network devices) to run all or some steps disclosed in the embodiments of the present disclosure. The storage medium includes USB drives, mobile hard drives, read-only memory (ROM), random access memory (RAM), floppy disks, or other types of media capable of storing program code.

The embodiments of the present disclosure are combinations of technologies/processes that can be adopted in 3GPP specifications to create a final product.

While the present disclosure has been described in conjunction with what is considered the most practical and preferred embodiments, it should be understood that the present disclosure is not limited to the disclosed embodiments but is intended to cover various arrangements made within the broadest interpretation of the appended claims without departing from the scope thereof.

## Claims

1. A method for wireless communication between user equipment (UE), comprising:
a second relay UE receiving a UE-to-UE relay discovery announcement message from a first relay UE;
the second relay UE determining whether to transmit a first message to a first remote UE connected to the second relay UE based on the UE-to-UE relay discovery announcement message, wherein the first message is for the second relay UE to reassign a local ID to the first remote UE.

2. The method according to claim 1, wherein the UE-to-UE relay discovery announcement message comprises at least a first subset of a UE identifier (ID) mapping relationship set associated with the first relay UE, the UE ID mapping relationship set comprises a mapping relationship between a UE Layer2 identifier (L2 ID) of each UE in a plurality of UEs that the first relay UE has connected to and/or discovered and the local ID, wherein the local ID of each UE in the plurality of UEs is uniquely assigned by the first relay UE, and wherein the first subset comprises a mapping relationship between the local ID assigned by the first relay UE to the first remote UE connected to the first relay UE and the UE L2 ID of the first remote UE.

3. The method according to claim 2, wherein the second relay UE determining whether to transmit the first message to a second remote UE connected to the second relay UE based on the UE-to-UE relay discovery announcement message comprises:
transmitting the first message to the second remote UE when the local ID of one UE in the plurality of UEs that the first relay UE has connected to and/or discovered conflicts with the local ID assigned to the first remote UE by the second relay UE.

4. The method according to claim 3, further comprising:
the second relay UE transmitting the first message to the second remote UE;
the second relay UE receiving a first response message from the second remote UE.

5. A second relay user equipment (UE), configured to perform the method according to any one of claims 1 to 4.

6. A method for wireless communication between user equipment (UE), comprising:
a first relay UE forwards a UE-to-UE relay discovery request message to a second relay UE, wherein the second relay UE is located between the first relay UE and a first remote UE, comprising:
wherein the first relay UE forwards the UE-to-UE relay discovery request message along with at least a first subset of a set of UE identifier (ID) mapping relationships associated with the first relay UE to the second relay UE.

7. The method according to claim 6,
wherein the set of UE ID mapping relationships comprises a first mapping relationship between a UE Layer2 identifier (L2 ID) and a local ID for each UE of a first plurality of UEs connected to and/or discovered by the first relay UE, wherein the local ID for each UE of the first plurality of UEs is uniquely assigned by the first relay UE, and
wherein the first subset comprises a second mapping relationship between the UE Layer2 identifier (L2 ID) and the local ID of a second remote UE requesting discovery.

8. The method according to claim 6 or 7, further comprising:
the first relay UE receiving the UE-to-UE relay discovery request message from the second remote UE, wherein the UE-to-UE relay discovery request message comprises respective UE L2 IDs of the second remote UE and the first remote UE;
the first relay UE receiving a UE-to-UE relay discovery response message from the second relay UE; and
the first relay UE forwarding the UE-to-UE relay discovery response message to the second remote UE.

9. The method according to claim 8, wherein the UE-to-UE relay discovery response message received by the first relay UE from the second relay UE is transmitted by the second relay UE upon determining that the first mapping relationship comprises the UE L2 ID of a UE connected to the second relay UE.

10. The method according to any one of claims 6 to 8, wherein the relay discovery response message comprises a second mapping relationship between the UE L2 ID and a local identifier (ID) for each UE of a second plurality of UEs linked and/or discovered by the second relay UE, wherein the local ID for each UE of the second plurality of UEs is uniquely assigned by the second relay UE, and the second plurality of UEs comprises the first remote UE.

11. The method according to claim 10, wherein forwarding the UE-to-UE relay discovery response message to the second remote UE by the first relay UE comprises:
the first relay UE assigning a local ID to the second remote UE based on the second mapping relationship;
the first relay UE forwarding the local ID assigned to the second remote UE and the first mapping relationship between the UE L2 ID and the local ID of the first remote UE along with the UE-to-UE relay discovery response message to the second remote UE.

12. A first relay user equipment (UE), wherein the first relay UE is configured to perform the method according to any one of claims 6 to 9.

13. A method for wireless communication between user equipment (UE), comprising:
a second relay UE receiving a UE-to-UE relay discovery request message from a first relay UE, wherein the UE-to-UE relay discovery request message comprises respective UE Layer2 identifiers (L2 ID) of a second remote UE and a first remote UE, and the first relay UE is located between the second remote UE and the second relay UE.

14. The method according to claim 13,
wherein the UE-to-UE relay discovery request message comprises at least a first subset of a set of UE identifier (ID) mapping relationships associated with the first relay UE, the set of UE ID mapping relationships comprises a first mapping relationship between the UE L2 ID and a local identifier (ID) for each UE of a first plurality of UEs connected to and/or discovered by the first relay UE, wherein the local ID for each UE of the first plurality of UEs is uniquely assigned by the first relay UE, and
wherein the first subset comprises a mapping relationship between the local ID assigned by the first relay UE to the second remote UE connected to the first relay UE and the UE L2 ID of the second remote UE.

15. The method according to claim 13 or 14, further comprising, the second relay UE transmitting a UE-to-UE relay discovery response message to the first relay UE for the first relay UE to forward the UE-to-UE relay discovery response message to the second remote UE.

16. The method according to any one of claims 13 to 15, further comprising:
the second relay UE determining whether to transmit a first message to a terminal UE connected to the second relay UE based on the UE-to-UE relay discovery request message.

17. The method according to claim 16, wherein the second relay UE determining whether to transmit a first message to a terminal UE connected to the second relay UE based on the UE-to-UE relay discovery request message, comprising:
in response to the UE-to-UE relay discovery request message identifying a conflict between a local ID and the local ID assigned by the second relay UE to the terminal UE, determining to transmit a first message to the terminal UE, wherein the first message includes a new local ID assigned by the second relay UE to the terminal UE.

18. The method according to claim 16, further comprising:
the second relay UE transmitting the first message to the terminal UE;
the second relay UE receiving a first response message from the terminal UE.

19. The method according to any one of claims 13 to 18, further comprising:
the second relay UE finding the first remote UE based on the UE L2 ID of the first remote UE included in the relay discovery request message and forwards the UE-to-UE relay discovery request message to the first remote UE;
the second relay UE receiving a UE-to-UE relay discovery response message from the first remote UE.

20. The method according to claim 19, wherein forwarding the UE-to-UE relay discovery request message to the first remote UE by the second relay UE comprises:
the second relay UE forwarding the UE-to-UE relay discovery request message to the first remote UE.

21. The method according to claim 20, wherein the second mapping relationship comprises:
a mapping relationship between the UE L2 ID and a local identifier (ID) for each UE of a second plurality of UEs connected to and/or discovered by the second relay UE before finding the first remote UE, wherein the local ID for each UE of the second plurality of UEs is uniquely assigned by the second relay UE, and
an additional mapping relationship between the UE L2 ID of the first remote UE and the local ID assigned by the second relay UE to the first remote UE based on the mapping relationship.

22. The method according to claim 20, wherein transmitting the UE-to-UE relay discovery response message to the first relay UE by the second relay UE comprises:
the second relay UE transmitting the UE-to-UE relay discovery response message along with the second mapping relationship to the first relay UE.

23. The method according to claim 21, wherein forwarding the UE-to-UE relay discovery response message to the second remote UE by the first relay UE comprises:
the first relay UE assigning a local ID to the second remote UE based on the second mapping relationship received from the first relay UE;
the first relay UE forwarding the local ID assigned to the second remote UE and the additional mapping relationship along with the UE-to-UE relay discovery response message to the second remote UE.

24. A second relay user equipment (UE), wherein the second relay UE is configured to perform the method according to any one of claims 11 to 20.

25. A method for wireless communication for a first relay user equipment (UE), comprising:
the first relay UE transmitting a first response message to the first remote UE in response to receiving a first message from the connected first remote UE,
wherein the first response message comprises a local identifier (ID) assigned by the first relay UE to the first remote UE.

26. The method according to claim 25, further comprising:
the first relay UE transmitting a second message to a second relay UE,
wherein the second message comprises a mapping relationship between the local ID and UE L2 ID of the first remote UE.

27. The method according to claim 25, wherein the second relay UE is connected to a second remote UE, and the second relay UE assigns the local ID to the second remote UE, and wherein the method further comprises:
the first relay UE receiving a second response message from the second relay UE.

28. The method according to claim 26, wherein in the case of a conflict between the local ID assigned by the second relay UE to the second remote UE and the local ID assigned by the first relay UE to the first remote UE, the second response message comprises a re-assigned local ID for the first remote UE by the second relay UE, and wherein the first response message transmitted by the first relay UE to the first remote UE comprises the re-assigned local ID for the first remote UE by the second relay UE.

29. The method according to any one of claims 25 to 27, wherein a third relay UE is also included between the first relay UE and the second relay UE, and wherein transmitting the second message to the second relay UE by the first relay UE comprises:
the first relay UE transmitting the second message to the third relay UE for the third relay UE to add all local IDs assigned by the third relay UE to the second message and transmit the resulting message to the second relay UE.

30. The method according to claim 25, further comprising:
the first relay UE receiving a third message from the first remote UE, wherein the third message comprises the UE Layer2 identifier (L2 ID) of a second remote UE that the first remote UE requests to communicate with the first relay UE.

31. The method according to claim 29, further comprising:
the first relay UE transmitting a fourth message to the second relay UE in response to receiving a discovery message broadcast by the second relay UE among the plurality of relay UEs,
wherein the second relay UE is connected to the second remote UE, and the second relay UE has assigned the local ID to the second remote UE, and the discovery message includes the UE L2 ID of the second remote UE, and
wherein the fourth message includes all local IDs assigned by the first relay UE and the UE L2 ID of the second remote UE.

32. The method according to claim 30, further comprising:
the first relay UE receiving a fourth response message from the second relay UE and forwarding the fourth response message to the first remote UE.

33. The method according to claim 31, wherein in the case of a conflict between the assigned local ID of the second remote UE and the local ID assigned by the first relay UE to the first remote UE, the fourth response message comprises a re-assigned local ID for the second remote UE by the second relay UE, and wherein the fourth response message received by the first relay UE from the second relay UE comprises the re-assigned local ID for the second remote UE by the second relay UE.

34. A first relay user equipment (UE), wherein the first relay UE is configured to perform the method according to any one of claims 22 to 30.
